# EUROPÄISCHE PATENTANMELDUNG

(11) **EP 0 970 795 A1**
(43) Veröffentlichungstag der Anmeldung: **12.01.2000**
(21) Anmeldenummer: 99112182.3
(22) Anmeldetag: 24.06.1999
(51) Int. Cl.: B29C 47/00

(54) **Verfahren und Vorrichtung zur Beeinflussung des Fliessverhaltens**

(30) Priorität: 06.07.1998 DE 19830296
(71) Anmelder: A-Z Formen und Maschinenbau GmbH, D-80992 München (DE)
(72) Erfinder: Fischer, Florian, 85560 Ebersberg (DE)
(74) Vertreter: Baronetzky, Klaus, Dipl.-Ing.

(57) **Zusammenfassung**

Die Erfindung betrifft ein Verfahren zur Beeinflussung des Fließverhaltens plastischer Elastomermassen, insbesondere bei der Extrusion. Sie betrifft weiterhin eine Vorrichtung zur Behandlung solcher plastischer Elastomermassen sowie deren Verwendung. Die Elastomermassen werden mit Hochfrequenz-Schwingungen beaufschlagt.

## Beschreibung

Die Erfindung betrifft ein Verfahren zur Beeinflussung des Fließverhaltens plastischer Elastomermassen, insbesondere bei der Extrusion für Reifenlaufflächen gemäß dem Oberbegriff von Anspruch 1, eine Vorrichtung zur Behandlung solcher plastischer Elastomermassen gemäß dem Oberbegriff von Anspruch 16, sowie deren Verwendung.

Plastische Elastomermassen finden breite Verwendung in der Industrie, unter anderem bei der Herstellung und bei der Runderneuerung von Fahrzeugreifen. Beispielhaft sei auf die EP 0 355 638 B1 verwiesen, die die Formung der extrudierten Elastomermasse in einem Laufstreifen-Spritzkopf und das Aufbringen auf eine Karkasse zeigt.

Die meisten dabei verwendeten Mischungen basieren auf Naturkautschuk oder synthetischen Kautschuken oder kautschukähnlichen Materialien, denen zahlreiche Zusatzstoffe beigefügt werden. Unter anderem enthalten die meisten Mischungen sogenannte Füllstoffe, beispielsweise Ruße oder Silicate. Solche (hoch-)verstärkten, d.h. einen hohen Gehalt an Füllstoffen aufweisende Elastomermischungen finden insbesondere bei Laufflächenmischungen für Lkw- und Pkw-Reifen Anwendung, da hier eine hohe Abriebfestigkeit und eine geringere Walkarbeit des Reifens besonders vorteilhaft ist. Dabei ist eine Tendenz hin zu besonders hochverstärkten Mischungen zu erkennen.

Solche hochverstärkten plastischen Elastomermassen besitzen naturgemäß eine sehr hohe Viskosität, was beim Verarbeiten solcher Massen bzw. Mischungen, insbesondere in engen Fließkanälen, Probleme bereiten kann. So kann die Verarbeitbarkeit z.B. in Extrudern, Innenmischern und Knet- und Walzwerken an praktische Grenzen stoßen, da die Reibungs- und Scherkräfte sehr groß werden. Es kann sogar dazu kommen, daß eine aufgrund ihrer vorteilhaften Eigenschaften für Reifenlaufflächen erwünschte hochverstärkte Elastomermasse, also eine Elastomermasse mit hohem Füllstoffanteil, aufgrund ihrer hohen Viskosität und der schlechten Fließeigenschaften nicht in einem herkömmlichen Extruder verarbeitet werden kann.

Hochverstärkte Elastomermassen müssen regelmäßig bei relativ hohen Extrudattemperaturen extrudiert werden. Jedoch sollte die Extrudattemperatur jedenfalls unter 120°C bleiben, allein schon, um ein vorzeitiges Vulkanisieren zu vermeiden.

Aufgrund der schlechten Fließeigenschaften ist zudem der Ausstoß hochverstärkter plastischer Elastomermassen häufig geringer, so daß bei Umstellung auf höherverstärkte Elastomermassen die Reifenhersteller oder -runderneuerer entweder einen verminderten Ausstoß in Kauf nehmen müssen, oder zusätzliche Extruder und entsprechende Belegemaschinen anschaffen müssen, was erhebliche Zusatzinvestitionen bedingt.

Demgegenüber liegt der Erfindung die Aufgabe zugrunde, ein Verfahren gemäß dem Oberbegriff von Anspruch 1 sowie eine Vorrichtung gemäß dem Oberbegriff von Anspruch 16 bereitzustellen, das bzw. die die Verarbeitung von Elastomermassen erleichtert und insbesondere bei hochverstärkten Elastomermassen einen verbesserten Ausstoß erlaubt.

Diese Aufgabe wird erfindungsgemäß durch die Ansprüche 1 bzw. 16 gelöst. Vorteilhafte Weiterbildungen ergeben sich aus den Unteransprüchen.

Es konnte überraschenderweise festgestellt werden, daß das Fließverhalten plastischer Elastomermassen durch eine hochfrequente Schwingungsbeaufschlagung positiv beeinflußt werden kann. Das erfindungsgemäße Verfahren ermöglicht die bessere Verarbeitbarkeit plastischer Elastomermassen, wobei insbesondere das Verhalten der Elastomermassen in engen Fließkanälen verbessert wird. So zeigt sich bei gleichem Volumenstrom eine geringere Temperaturerhöhung; bei gleicher Temperatur sind erfindungsgemäß höhere Volumenströme möglich.

Daher ermöglicht es das erfindungsgemäße Verfahren überraschenderweise, auch hochviskose, hochverstärkte Elastomermassen, die andernfalls nur bei geringen Volumenströmen extrudiert werden können, bei gleicher Temperatur mit erheblich höheren Volumenströmen zu extrudieren. Weiterhin können lokale Temperaturanstiege im Extrudat verringert bzw. vermieden werden, so daß ein unerwünschtes vorzeitiges Vulkanisieren des Extrudats oder andere negative Auswirkungen einer zu starken Temperaturerhöhung vermieden werden können. Schließlich ist es nach dem erfindungsgemäßen Verfahren auch möglich, hochverstärkte Elastomermassen zu verarbeiten, die aufgrund ihrer sehr hohen Viskosität, z.B. im Bereich von ca. 80 bis 150 Mooney nach DIN 53523, nach herkömmlichen Verfahren nicht oder nur sehr schlecht extrudiert werden können.

Nach dem auf füllstoffhaltige Gummimischungen übertragenen Dissipationsmodell (vgl. A. Limper/P. Barth/F. Grajewski, "Technologie der Kautschukverarbeitung", Carl Hanser Verlag München, 1989, S. 5f) werden fließfähige und feste Phasen im Fließkanal unterschieden. Das bedeutet, daß im Fließkanal eine 2-Phasen-Strömung vorliegt, wobei die gesamte Scherung und somit die Dissipation im Kautschukbereich, d.h. zwischen den Füllstoffpartikeln, stattfindet. Somit ist in hochverstärkten Elastomermassen die dissipierte Energie stark erhöht. Weiterhin weisen füllstoffhaltige Elastomermassen eine sogenannte Fließgrenze auf. Ohne sich auf einen theoretischen Mechanismus der Beeinflussung des Fließverhaltens plastischer Elastomermassen durch hochfrequente Schwingungsbehandlung beschränken zu wollen, wird angenommen, daß durch die Hochfrequenzschwingung makromolekulare und mikrokristalline Strukturen, aber gegebenenfalls auch die Füllstoffpartikel in einer Weise beeinflußt werden, daß die Reibungs- und Scherkräfte abnehmen.

Bei den erfindungsgemäßen Versuchen wurde eine Senkung der Extrudattemperatur bei hochfrequenter Schwingungsbehandlung beobachtet. Offenbar kommt es zu einem Übergang von Haft- zu Gleitreibung, und das sogenannte "Wandgleiten", wie es im Ausstoßbereich eines Extruders auftritt, wird positiv beeinflußt.

Unter plastischer Elastomermasse werden hier zunächst alle Mischungen auf der Grundlage von Elastomeren verstanden, wie sie dem Fachmann geläufig sind. Insbesondere fallen darunter Polymere mit gummielastischem Verhalten, wie die natürlichen und synthetischen Kautschuke und kautschukartigen Materialien. Einen Überblick über einige bekannte Elastomere bietet beispielsweise Roempp Chemie Lexikon, 9. Auflage, 1990, Seiten 1105 bis 1107, wobei die Auswahl nicht auf die dort ausgeführten Elastomere beschränkt ist.

Besonders vorteilhaft sind Mischungen aus Naturkautschuk und/oder synthetischem Kautschuk, denen Vulkanisatoren, Vulkanisationsbeschleuniger bzw. -verzögerer, Aktivatoren und dergleichen zugesetzt sein können. Weiterhin können zusätzliche Additive, wie Pigmente, Weichmacher, Elastikatoren, Mastiziermittel, Alterungsschutzmittel, Treibmittel, Flammschutzmittel, Konservierungsmittel, geruchsverbessernde Mittel, Antistatika, Trennmittel, Haftmittel und dergleichen enthalten sein.

Besonders vorteilhaft ist das erfindungsgemäße Verfahren bei hochviskosen, hochverstärkten Elastomermassen, die sogenannte Füllstoffe enthalten, anwendbar. Übliche Füllstoffe sind dem Fachmann auf diesem Gebiet bekannt und umfassen beispielsweise Ruße, Kieselgel, Silicate wie Kaolin, Kreide, Talg etc. Der Füllstoffgehalt kann bei bis zu 50 phr (phr = Gewichtsteile auf 100 Gewichtsteile Gummi/Elastomer in der Masse), aber auch bei 150 phr oder wesentlich darüber liegen. Der genaue Füllstoffgehalt ist insbesondere von der gewünschten Verstärkung der Elastomermasse und der vorstehend angesprochenen Grenze der Verarbeitbarkeit der hochviskosen Masse abhängig.

Unter die erfindungsgemäß verwendbaren Elastomermassen fallen auch die sogenannten thermoplastischen Elastomere (Elastoplaste, Thermoplaste) mit den entsprechenden TPE Klassen. Dazu zählen beispielsweise die Styroltypen, die Elastomerlegierungen, Polyurethane, Polyetherester, Polyetheramide usw. Einen Überbilck über thermoplastische Elastomere bietet: "Kunststoffe 77", Seiten 767 bis 776 (1987).

Es können auch Elastomermassen verwendet werden, die ein Gemisch aus zwei oder mehreren der vorstehenden Stoffklassen enthalten.

Besonders vorteilhaft läßt sich das erfindungsgemäße Verfahren beim Extrudieren einer Elastomermasse zur Herstellung von Laufflächenmischungen für Reifen anwenden. Die gängigen hierzu verwendeten Mischungen sind meist hochverstärkte plastische Elastomermassen und sind dem Fachmann auf dem Gebiet der Gummiherstellung geläufig. Vorzugsweise handelt es sich dabei um Gummimischungen, bei denen Silicate oder Ruße als Füllstoffe verwendet werden, wobei besonders bei Elastomermassen zur Herstellung von Laufflächenmischungen für Fahrzeugreifen eine Tendenz zur Verwendung von hochverstärkten hochviskosen Mischungen mit hohem Füllstoffgehalt vorliegt, nachdem bei derart hergestellten Reifen-Laufflächen das Abriebverhalten wesentlich verbessert ist.

Es wurde festgestellt, daß die erfindungsgemäße Schwingungsbeaufschlagung besonders vorteilhaft ist, wenn ein langer, enger Fließkanal erforderlich ist, in dem dann hohe Reibungs- und Scherkräfte auftreten. Dies ist beispielsweise bei den zur Verarbeitung von Gummimischungen verwendeten Extrudern der Fall. Ähnliche Bedingungen, bei denen das erfindungsgemäße Verfahren vorteilhaft ist, liegen auch vor, wenn plastische Elastomermassen durch Leitungssysteme mit verhältnismäßig geringem Leitungsquerschnitt geschickt werden, z.B. in Knetern oder in Walzwerken, oder bei sonstigen plastischen Umformungen nicht-vulkanisierter Elastomermassen.

Die Schwingungsbeaufschlagung erfolgt bevorzugt, kurz bevor und/oder während die Elastomermasse z.B. durch einen Extruder, ein Leitungssystem, einen Kneter, ein Walzwerk oder dergleichen gedrückt wird, also dann, wenn das ungünstige Fließverhalten der hochviskosen Elastomermassen bei der Verarbeitung Probleme bereitet.

Zur Schwingungsbeaufschlagung kann eine geeignete Schwingungserzeugungsvorrichtung verwendet werden. Dabei ist die Schwingungserzeugungsvorrichtung so angeordnet, daß die gewünschte Schwingung in der vorgesehenen Abstrahlrichtung auf die Elastomermasse übertragen wird.

Unter hochfrequenter Schwingung wird hier eine Schwingung mit einer Frequenz zwischen etwa 2 KHz und 100 MHz, insbesondere zwischen 10 und 500 KHz, und insbesondere zwischen 20 und 40 KHz verstanden.

Die Schwingungsbeaufschlagung kann längs oder quer zur Fließrichtung der Elastomermasse und in kontinuierlicher oder diskontinuierlicher Form, beispielsweise mit Impulsen von 2-5 Sekunden Dauer im Abstand von 2 Sekunden, erfolgen.

Gemäß einer weiteren bevorzugten Ausgestaltung wird die Frequenz der durch die Schwingungserzeugungsvorrichtung erzeugten Schwingungen periodisch geändert, so daß auch Teilchen mit unterschiedlichen Resonanzfrequenzen erfaßt werden können.

Als Schwingungserzeugungsvorrichtung kann bevorzugt eine Ultraschallquelle eingesetzt werden, die drucksteif mit der Kanalwand des Extruders verbunden ist oder gegebenenfalls im Extrudatstrom angeordnet ist.

Erfindungsgemäß ist ferner die Verwendung einer Vorrichtung zum Extrudieren, Leiten, Kneten oder Walzen einer plastischen Elastomermasse bei der Herstellung von Reifen bzw. von Laufflächen für Reifen unter Verwendung von hochverstärkten Gummimischungen mit hohen Viskosität vorgesehen, wobei die Vorrichtung mit einer Hochfrequenz-Schwingungserzeugungsvorrichtung ausgerüstet ist. Solche Elastomermassen können, wie vorstehend erläutert, mit herkömmlichen Vorrichtungen oft nur sehr unzulänglich oder überhaupt nicht verarbeitet werden.

Gemäß einer besonders günstigen Ausgestaltung der Erfindung ist es möglich, vorhandene Extruder oder andere, zur Verarbeitung von Elastomermassen erforderliche Vorrichtungen, mit einer erfindungsgemäßen Schwingungserzeugungsvorrichtung nachzurüsten. Dadurch läßt sich mit ziemlich geringen Ausrüstungskosten der Ausstoß auf der gleichen Höhe wie bei Verwendung von Elastomerteilen mit nur einem geringen Feststoffanteil halten, oder gegebenenfalls sogar erhöhen.

Besonders günstig ist es ferner, daß durch die erfindungsgemäße Schwingungsbeaufschlagung mit hochfrequenten Schwingungen die Homogenität der extrudierten Elastomermasse verbessert wird, und sich auch enge Kavitäten mit gutem Wandanschluß füllen lassen.

Die Schallbeaufschlagung von Fluiden zu verschiedenen Zwecken ist an sich bekannt. So zeigt die DE-OS 39 30 052 einen Schallwandler zur Beaufschlagung eines Flüssigkeits-Gasgemisches.

Ferner ist aus der EP-A1-0 291 424 und der EP-A1-0 168 512 bekannt, Metallschmelzen bzw. Metallpulvermischungen einer niederfrequenten Vibration, beispielsweise im Bereich von etwa 50 bis etwa 400 Hz, zu unterwerfen, um Luftbläschen zu entfernen und damit ein vollständiges und blasenfreies Ausfüllen von Gußformen zu ermöglichen. Vibrations- und Rüttelmaßnahmen sind ferner vorgeschlagen worden, um Luftbläschen aus Kunstharzlösungen zu entfernen. Es versteht sich, daß dies mit einer Beaufschlagung von Feststoffpartikeln mit Hochfrequenz-Schwingungen nichts zu tun hat.

Weitere Einzelheiten, Vorteile und Merkmale ergeben sich aus der nachfolgenden Beschreibung zweier Ausführungsformen anhand der Zeichnung.

Es zeigen:
- Fig. 1: eine teilweise aufgebrochene schematische Ansicht einer ersten Ausführungsform einer erfindungsgemäßen Vorrichtung; und
- Fig. 2: eine ebenfalls schematische Ansicht einer weiteren Ausführungsform einer erfindungsgemäßen Vorrichtung.

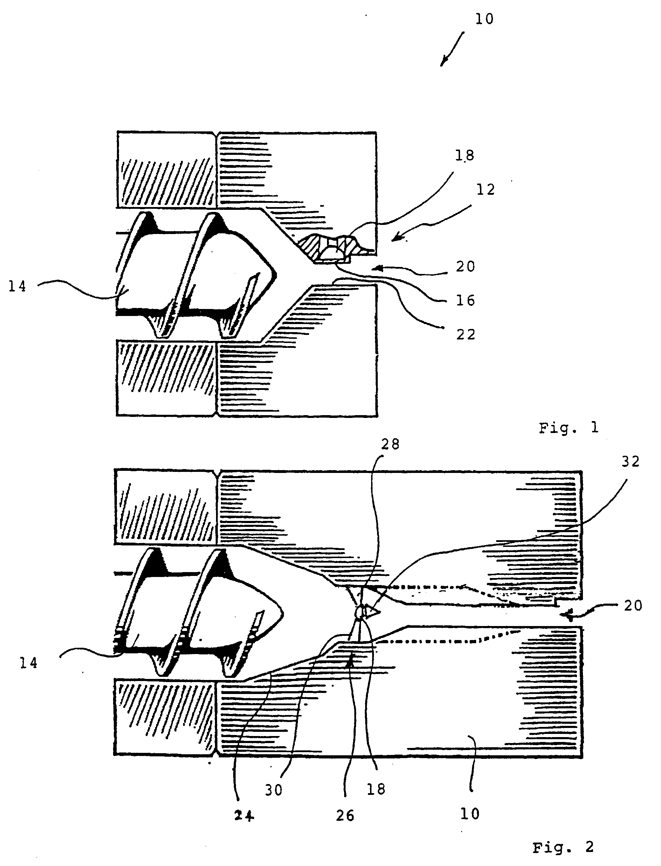

Aus Fig. 1 ist ein Teil eines Extruders 10 ersichtlich, der als erfindungsgemäße Vorrichtung mit einer Schwingungserzeugungsvorrichtung 12 ausgestattet ist. Der Extruder weist in üblicher Weise eine Extruderschnecke 14 auf, die dem Extrudieren der mit Feststoffpartikeln angereicherten Elastomermasse dient.

In dem dargestellten Ausführungsbeispiel ist ausgangsseitig der Extruderschnecke die Schwingungserzeugungsvorrichtung 12 vorgesehen. Es versteht sich, daß anstelle dessen oder zusätzlich weitere Schwingungserzeugungsvorrichtungen eingangsseitig der Extruderschnecke vorgesehen sein können, oder über den Verlauf der Extruderschnecke 14 verteilt sein können, um die Fließfähigkeit der Elastomermasse dort zu verbessern.

In dem in Fig. 1 dargestellten Ausführungsbeispiel ist ein vergleichsweise dünner Wandbereich 16 vorgesehen, der eine Ultraschallquelle 18 großflächig lagert, um so eine gute Schwingungsübertragung von der Ultraschallquelle 18 auf den Wandbereich 16 und damit den Fließkanal für die Elastomermasse zu erzielen.

Besonders günstig ist es, daß die gegenüberliegende Wand 22 den Ultraschall zumindest teilweise reflektiert, so daß er sich gut in der Elastomermasse verteilt.

Aus der Darstellung gemäß Fig. 2 ist eine modifizierte Ausgestaltung einer erfindungsgemäßen Vorrichtung ersichtlich. Der dort dargestellte Extruder 10 weist zwischen dem Extruderauslaßkonus 24 und dem Fließkanal 20 einen Bereich 26 mit vergrößertem Durchmesser auf. In diesem Bereich 26 ist die Fließgeschwindigkeit des Extrudats deutlich geringer als im Fließkanal 20. Diese Stelle ist besonders günstig, um eine Ultraschallquelle 18 im Strom der Elastomermasse zentral zu lagern. Hierzu sind in Fließrichtung ausgerichtete, druckstabile Rippen 28 und 30 vorgesehen, die eine seitliche Abstützung der Ultraschallquelle erlauben. An die Ultraschallquelle 18 schließt sich in Strömungsrichtung ein Strömungsvergleichmäßigungskonus 32 an, der die Erzeugung von Turbulenzen durch die Anordnung der Ultraschallquelle verhindert oder zumindest vermindert.

Es versteht sich, daß die Rippen bevorzugt einen in etwa tropfenförmigen Querschnitt aufweisen, um auch insofern einen möglichst geringen Strömungswiderstand zu bieten. Überraschend ergibt sich trotz der zusätzlichen Anordnung der Ultraschallquelle 18 im Strömungsverlauf ein verringerter Strömungswiderstand.

Bei den Versuchen wurde eine hochverstärkte Gummimischung zur Herstellung von Laufstreiten von LKW-Reifen mit einer Viskosität von 100 Mooney durch einen Schneckenextruder (Transfermix-Extruder Modell MCTD 120 der vorliegenden Anmelderin) mit einer Fließkanallänge von ca. 300 mm nach der Schneckenspitze extrudiert. Die Extrusionstemperatur betrug 99°C und der Volumenstrom lag bei 320 kg/h.

Bei einer kontinuierlichen Schwingungsbeaufschlagung des Extrudats im Extruder 10 über die Ultraschallquelle 18 sank die Extrudatstemperatur um 4°C ab. Die deutliche Temperatursenkung zeigt, daß die Reibung erfindungsgemäß reduziert wird und aufgrund der verbesserten Fließeigenschaften der plastischen Elastomermasse eine verbesserte Ausbeute und eine Leistungserhöhung möglich ist.

Die Versuche ergaben, daß diese Leistungserhöhung gerade bei hochviskosen Elastomermassen, also Elastomermassen mit hohem Feststoffanteil, besonders wirksam ist.

Es versteht sich, daß die Art der Schwingungsbeaufschlagung in weiten Bereichen an die Erfordernisse angepaßt werden kann. So können die Ultraschallquellen beispielsweise auch intermittierend betrieben werden, wobei es günstig ist, die Schwingungsbeaufschlagung so anzupassen, daß beim Vorbeiströmen an der Ultraschallquelle alle Bereiche der Elastomermasse erfaßt werden.

## Patentansprüche

1. Verfahren zur Beeinflussung des Fließverhaltens plastischer Elastomermassen, insbesondere bei der Extrusion, gekennzeichnet durch eine hochfrequente Schwingungsbeaufschlagung, insbesondere von Feststoffpartikeln in der Elastomermasse.

2. Verfahren nach Anspruch 1, dadurch gekennzeichnet, daß es sich bei der Elastomermasse um eine Mischung auf der Basis von Elastomeren handelt.

3. Verfahren nach einem der vorstehenden Ansprüche, dadurch gekennzeichnet, daß es sich bei der Elastomermasse um eine Gummimischung auf der Basis natürlicher oder synthetischer Kautschuke handelt.

4. Verfahren nach einem der vorstehenden Ansprüche, dadurch gekennzeichnet, daß eine Reifen-Laufstreifen-Elastomermasse mit üblichen Zusätzen, insbesondere mit Feststoffpartikeln, verwendet wird.

5. Verfahren nach einem der vorstehenden Ansprüche, dadurch gekennzeichnet, daß es sich bei der Elastomermasse um eine Mischung auf der Basis von thermoplastischen Elastomeren und/oder thermoplastischen Werkstoffen handelt.

6. Verfahren nach einem der vorstehenden Ansprüche, dadurch gekennzeichnet, daß es sich bei der Elastomermasse um eine hochviskose Mischung handelt.

7. Verfahren nach einem der vorstehenden Ansprüche, dadurch gekennzeichnet, daß es sich bei der Elastomermasse um eine hochverstärkte Mischung mit einem hohen Füllstoffgehalt handelt.

8. Verfahren nach einem der vorstehenden Ansprüche, dadurch gekennzeichnet, daß der Füllstoffgehalt der Elastomermasse bei 50 Gewichtsteilen pro 100 Gewichtsteile Elastomermasse oder darüber, insbesondere bei 100 Gewichtsteilen pro 100 Gewichtsteile Elastomermasse oder darüber liegt.

9. Verfahren nach einem der vorstehenden Ansprüche, dadurch gekennzeichnet, daß die hochfrequente Schwingungsbeaufschlagung erfolgt, während die Elastomermasse durch einen Extruder, ein Leitungssystem, einen Kneter oder ein Walzwerk gefördert oder in eine bestimmte Form gebracht wird.

10. Verfahren nach einem der vorstehenden Ansprüche, dadurch gekennzeichnet, daß die hochfrequente Schwingungsbeaufschlagung bei 2 KHz bis 100 MHz, insbesondere bei 10 bis 40 KHz, erfolgt.

11. Verfahren nach einem der vorstehenden Ansprüche, dadurch gekennzeichnet, daß die hochfrequente Schwingungsbeaufschlagung quer zur Fließrichtung der Elastomermasse erfolgt.

12. Verfahren nach einem der vorstehenden Ansprüche, dadurch gekennzeichnet, daß die hochfrequente Schwingungsbeaufschlagung längs zur Fließrichtung der Elastomermasse erfolgt.

13. Verfahren nach einem der vorstehenden Ansprüche, dadurch gekennzeichnet, daß die Frequenz der hochfrequenten Schwingungsbeaufschlagung periodisch geändert wird.

14. Verfahren nach einem der vorstehenden Ansprüche, dadurch gekennzeichnet, daß die hochfrequente Schwingungsbeaufschlagung kontinuierlich erfolgt.

15. Verfahren nach einem der Ansprüche 1 bis 13, dadurch gekennzeichnet, daß die hochfrequente Schwingungsbeaufschlagung getaktet erfolgt.

16. Vorrichtung zum Extrudieren, Leiten, Kneten oder Walzen einer plastischen Elastomermasse oder zu deren Einbringen in eine bestimmte Form, dadurch gekennzeichnet, daß die Vorrichtung eine Schwingungserzeugungsvorrichtung (12) zur hochfrequenten Schwingungsbeaufschlagung der Elastomermasse aufweist.

17. Vorrichtung nach Anspruch 16, dadurch gekennzeichnet, daß die Schwingungserzeugungsvorrichtung in einen Extruder (10), insbesondere dem Fließkanal (20) benachbart, eingebaut ist und die Abstrahlrichtung der Schwingungserzeugungsvorrichtung (12) unmittelbar in das Extrudat verläuft.

18. Verwendung einer Vorrichtung gemäß Anspruch 16 oder 17 bei der Herstellung oder Runderneuerung von Reifen oder Reifen-Laufflächen.
